# EUROPÄISCHE PATENTSCHRIFT

(11) **EP 1 193 838 B1**
(45) Veröffentlichungstag und Bekanntmachung des Hinweises auf die Patenterteilung: **02.07.2003**
(21) Anmeldenummer: 00118828.3
(22) Anmeldetag: 31.08.2000
(51) Int. Cl.: H02K 11/00, H01H 79/00, H02K 23/66

(54) **Uberlastgeschützter Elektromotor, inbesondere Gleichstrom-Kommutatormotor**
Overload-protected electric motor, specially DC conmutator motor
Moteur électrique surcharge-protégé, plus particulièrement un moteur à c.c. de commutateur

(43) Veröffentlichungstag der Anmeldung: 03.04.2002
(73) Patentinhaber: SIEMENS AKTIENGESELLSCHAFT, 80333 München (DE)
(72) Erfinder: Göb, Werner, 97273 Kuernach (DE); Stoehling, Marco, 97725 Elfershausen (DE)

(56) Entgegenhaltungen:
- DE-A- 19 741 828
- FR-A- 2 730 357
- US-A- 4 177 396
- PATENT ABSTRACTS OF JAPAN vol. 015, no. 417 (E-1125), 23. Oktober 1991 (1991-10-23) -& JP 03 173314 A (FUJI ELECTRIC CO LTD), 26. Juli 1991 (1991-07-26)
- DATABASE WPI Derwent Publications Ltd., London, GB; AN 1986-294209 XP002161341 -& JP 61 214723 A (SUMITOMO ELECTRIC IND CO), 24. September 1986 (1986-09-24)

## Beschreibung

Die Erfindung bezieht sich auf einen überlastgeschützten Elektromotor, insbesondere Gleichstrom-Kommutatormotor, gemäß Patentanspruch 1; ein solcher Motor ist insbesondere als Massen-Serienprodukt zum Einsatz als Servo- bzw. Stellmotor in einem Kraftfahrzeug, z.B. als Lüfterantriebsmotor gemäß der DE 197 21 316 C1 bzw. der DE 34 34 429 C2, vorgesehen.

Derartige Motore sind in der Regel durch eine Haupt-Sicherung abgesichert und sprechen aufgrund ihrer Auslegung für die Gesamtlast eines zu überwachenden, u.a. den Elektromotor enthaltenden Stromkreises bei blockiertem bzw. schwergängigem Elektromotor nicht schnell genug oder überhaupt nicht an, so dass sich der schadhafte Motor übermäßig, gegebenenfalls bis zu einem Brandschaden, überhitzen kann.

Zum Schutz vor Wicklungsüberhitzung eines über einen Hauptschalter aus einer Spannungsquelle speisbaren Elektromotors ist es aus der JP-A-03 173 314 bekannt, einen wärmeempfindlichen Schalter in die Nähe der zu schützenden Wicklung zu bringen und bei Überschreiten einer vorgebbaren Wicklungstemperatur durch den Schalter einen Wicklungsteil satt kurzzuschließen, so dass der Hauptschalter den Motor von der Spannungsquelle zumindest solange trennt, bis die vorgebbare Wicklungstemperatur wieder unterschritten ist; Bimetall-Schalter als Schutzelemente gegenüber Motoruberhitzungen sind darüber hinaus allgemein bekannt.

Durch die US-A-4 177 396 ist ein Überhitzungsschutz für einen Kommutatormotor derart bekannt, dass im Überhitzungsfall ein motorseitig gehaltenes Bimetallelement durch seine Verformung eine Unterbrechung der Stromzufuhr zu den Bürsten des Kommutatormotors bewirkt.

Gemäß Aufgabe vorliegender Erfindung soll ein Schaden aufgrund eines einzelnen sich, insbesondere wegen Schwergängigkeit bzw. Blockierung, übermäßig erhitzenden Elektromotors mit einfachen Mitteln vermieden werden können.

Die Lösung dieser Aufgabe gelingt erfindungsgemäß durch einen überlastgeschützten Elektromotor gemäß Patentanspruch 1; vorteilhafte Ausgestaltungen der Erfindung sind jeweils Gegenstand der Unteransprüche.

Durch den erfindungsgemäß in einem Schadensfall schon bei beginnender Überlasterhitzung des Elektromotors mit einfachen Mitteln "provozierbaren" satten Kurzschluss kann mit Sicherheit eine Auslösung der ansonsten noch nicht ansprechenden Haupt-Sicherung und damit ein Abschalten des gefährdeten bzw. gefährdenden Elektromotors gewährleistet werden.

In baulich besonders einfacher, vorteilhaft mit wenigen Zusatzmitteln auch bei einem bereits vorhandenen bzw. bereits konzipierten Elektromotor nachrüstbarer Weise ist ein erfindungsgemäßer Überlastschutz mit gewährleisteter Sicherungsauslösung durch die Maßnahmen gemäß Anspruch 2 möglich, wobei der Bimetallschalter zweckmäßigerweise mit seinem einen Ende gehäusefest, insbesondere am kommutatorseitigen Lagerbügel, masseseitig derart angelenkt wird, dass er aufgrund der im Bereich des Kommutators bzw. der diesen beschleifenden Bürsten im Überlastfall abstrahlenden übermäßigen Erwärmung mit seinem freien schaltenden Ende aus einer Neutralstellung in eine direkte Kontaktstellung mit dem üblicherweise offen liegende Anschluss zwischen einer Bürste und ihrer direkten, nicht an Masse liegenden Stromzuleitung oder bei Zwischenanordnung einer Entstördrossel mit deren freier elektrischer nicht an Masse liegender Kontaktstelle umspringt und damit einen satten Kurzschluss und ein Ansprechen der Haupt-Sicherung veranlasst.

Die Erfindung sowie weitere vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: in einem axialen Teilschnitt das kommutatorseitige Ende eines bekannten Kommutatormotors zum Antrieb des Schaufelrades eines Kraftfahrzeug-Innenlüfters;
- FIG 2,3: in axialer bzw. radialer Draufsicht den kommutatorseitigen Ausschnitt eines Kommutatormotors gemäß FIG 1 zusätzlich mit nachträglich einbaubarer Kurzschluss-Auslösung bei Gefahr einer Motorüberhitzung;
- FIG 4: das Schaltbild zu der erfindungsgemäß provozierten Kurzschluss-Auslösung einer Haupt-Sicherung bei Gefahr einer Motor-Überhitzung.

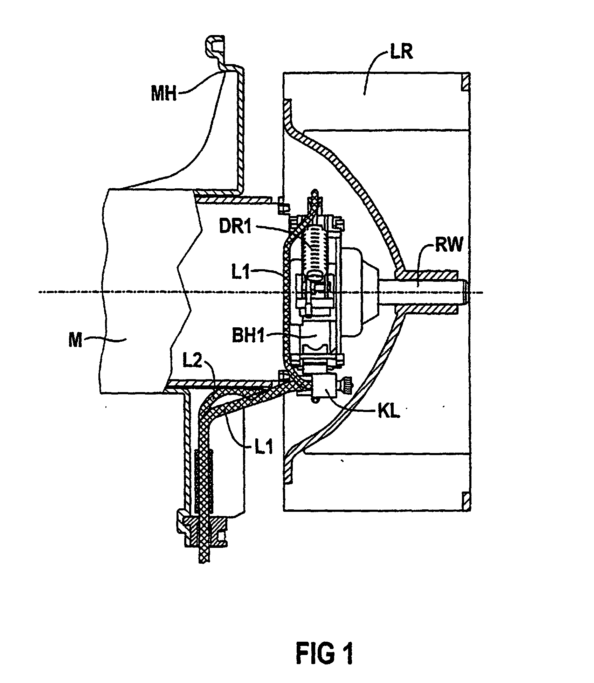

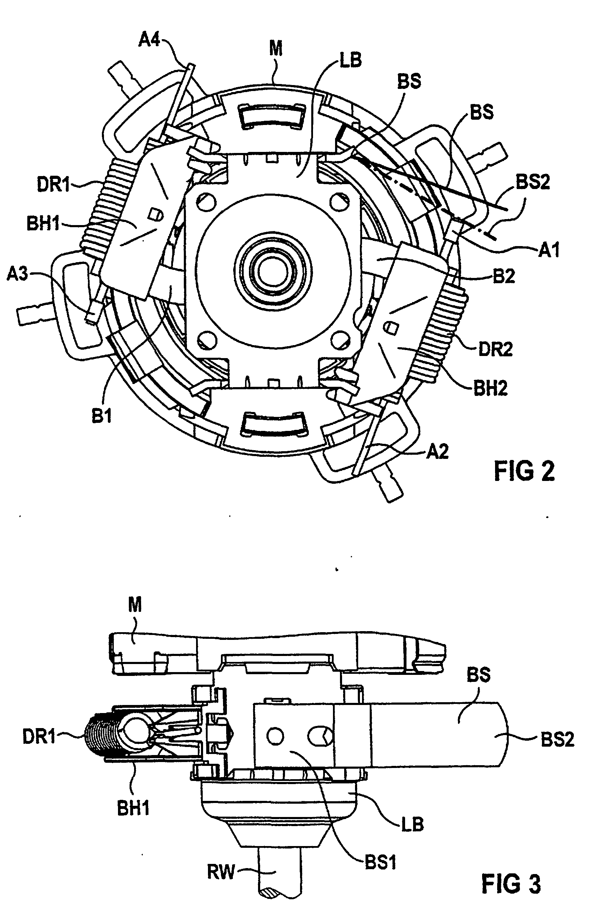

FIG 1 zeigt in aus der DE 197 21 316 C1 bekannten und FIG 2;3 zeigen in erfindungsgemäß ergänzter Weise jeweils das kommutatorseitige Ende eines als Elektromotor M vorgesehenen Kommutatormotors, dessen Motorgehäuse über eine Motorhalterung MH, in einer Aufnahme, insbesondere einem Gebläsegehäuse, fixierbar ist und auf dessen stirnseitig herausragender Rotorwelle RW ein Lüfterrad LR gehalten ist.

Zur Bestromung des Kommutators K des Elektromotors M dienen Hammer-Bürstenhalter HB1;HB2 die in einem kommutatorseitigen Lagerbügel LB schwenkbar gelagert sind. Auf dem Rücken der Hammer-Bürstenhalter HB1;HB2 sind Funkentstör-Drosseln DR1;DR2 angeordnet: diese sind jeweils mit ihrem einen endseitigen Anschluss A1 bzw.A3 über Litzen mit den Kommutator beschleifenden Kohlebürsten B1 bzw.B2 und mit ihrem anderen endseitigen Anschluss A2 bzw.A4 mit äußeren Stromzuleitungen L1;L2 in Reihe geschaltet. Im Zuge der äußeren Stromzuleitungen L1;L2 ist ein Zwischenklemmbrett KL vorgesehen, mit dem die äußeren Stromzuleitungen L1;L2 zugentlastet an dem Lagerbügel LB fixierbar und eine der beiden Stromzuleitungen, insbesondere bei Anwendung in einem Kraftfahrzeug, an mit dem negativen Pol N der Fahrzeugbatterie P;N. In z.B. durch die EP 0 708 519 B1 bekannter Art u.a. zur Verbesserung der elektromagnetischen Verträglichkeit an Masse MP anschließbar ist; der negative Pol N der Batterie ist seinerseits in deren Einbaunähe mit Masse MP des Fahrzeuges verbunden

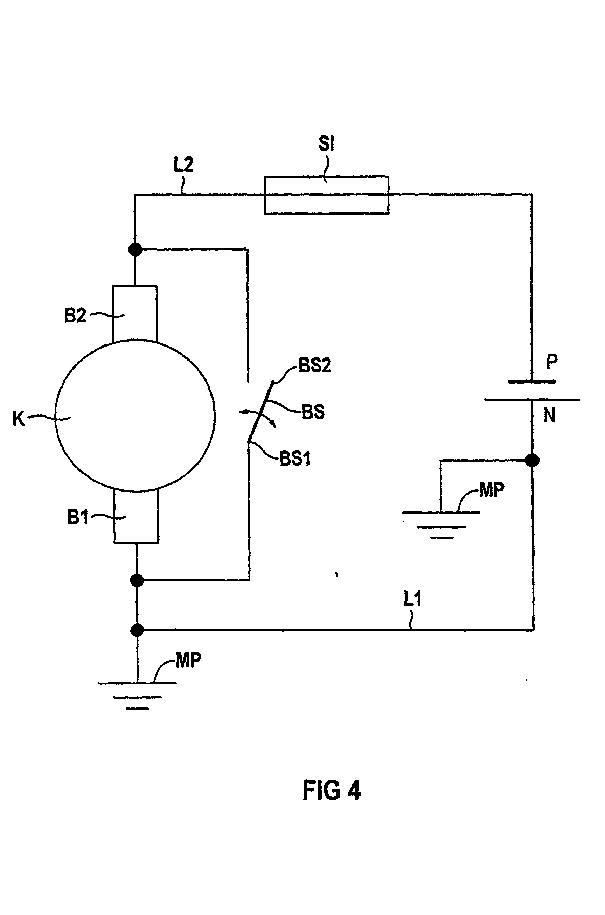

Erfindungsgemäß ist ein Elektromotor M der zuvor beschriebenen Art gemäß dem Konstrunktionsbeispiel in FIG 2;3 bzw. gemäß dem Schaltbild in FIG 4 zur Gewährleistung eines in jedem Fall sicheren und schnellen Ansprechens einer im Zuge der Verbindung zwischen einer Fahrzeug-Batterie P;N und der den Kommutator K beschleifenden Bürsten B1;B2 angeordneten Haupt-Sicherung SI mit einem Bimetall-Schaltelement BS als Kurzschluss-Auslöser für die ansonsten nocht nicht ansprechende Haupt-Sicherung bei zu starker Erwärmung vorgesehen.

Das Bimetall-Schaltelement BS ist in vorteilhafter Weise im Wärmestrahlungsbereich des Kommutators K bzw. der diesen beschleifenden Bürsten B1;B2 und dabei in fertigungstechnisch besonders einfacher Weise mit einer Befestigung seines einen Endes BS1 an einem als Masse MP benutzten Statorteil, insbesondere einem Lagerbügel LB, des Elektromotors M und mit seinem anderen freien Ende BS2 aus einer kontaktfreien Neutralstellung in eine Kontakt-Stellung zum elektrischen Anschluss A1 einer von einem Bürstenhalter B2, insbesondere einem Hammerbürstenhalter HB1, aufgenommenen Entstördrossel DR1 mit der zu der Masse MP isolierten Zuleitung L2 vorgesehen.

Bei Erreichen einer definierten Überhitzung des elektrischleitenden Bimetall-Schaltelements BS springt dessen freies Ende BS2 von der in FIG 2 in linierter Kontur angegebenen Stellung in die mit strichpunktierter Kontur angegebene Kontaktstellung zu dem Anschluss A1 der Entstördrossel DR2 bzw. Bürste B2 und damit in Kurzschlußstellung bei geschlossenem Bimetall-Schaltelement BS in FIG 4.

Zusammenfassend ergibt sich somit folgender erfindungsgemäßer Sachverhalt: Ein schneller und sicherer Überhitzungs- bzw. Brandschutz für einen in einem Stromkreis mit weiteren Verbrauchern nur durch eine Haupt-Sicherung SI geschützten Elektromotor M kann mit einfachen Mitteln durch einen im Überlastfall durch die zusätzliche Erwärmung provozierten satten Kurzschluss erreicht werden; in baulich besonders einfacher Weise schliesst bei einem Kraftfahrzeug-Kommutatormotor ein Bimetall-Schaltelement BS im Bereich der Bürsten B1;B2 die mit dem einen Batteriepol N und Masse MP verbundene Zuleitung L1 mit der an den anderen Batteriepol P angeschlossenen zu der Masse MP ansonsten isolierten Zuleitung L2 kurz.

## Patentansprüche

1. Überlastgeschützter Elektromotor, insbesondere Gleichstrom-Kommutatormotor,
- mit einer dem Elektromotor (M) und weiteren Verbrauchern seines Stromkreises zum Schutz in einem Überlastfall zugeordneten, bei Ansprechen die Speisespannung (P;N) abtrennenden, Haupt-Sicherung (SI);
- mit einem aufgrund einer definierten Motorüberhitzung einen gewollten satten Kurzschluss des Elektromotors (M) bewirkenden und dadurch die Haupt-Sicherung (SI) zum Ansprechen bringenden Schaltelement;
- mit einem Elektromotor (M) in Form eines Kommutatormotors mit einer Stromzuführung zu zumindest zwei einen Kommutator (K) beschleifenden Bürsten (B1;B2), von denen eine erste Bürste (B1) über eine auch an Masse (MP) des Elektromotors (M) angeschlossene Zuleitung (L1) und eine zweite Bürste (B) über eine zu der Masse (MP) isolierte Zuleitung (L2) aus der Speisespannung (P;N) gespeist ist;
- mit einem Schaltelement in Form eines mit der Masse (MP) verbundenen und bei Erreichen der definierten Motorüberhitzung durch Schaltbewegung die Masse (MP) mit einem freien Anschluss (A1) der zur Masse (MP) isolierten Zuleitung (L2) kontaktierenden Bimetall-Schaltelementes (BS) oder dergleichen.

2. Überlastgeschützter Elektromotor nach Anspruch 1
- mit einem Schaltelement in Form eines mit seinem einen Ende (BS1) an der Masse (MP) befestigten, elektrisch leitfähigen Bimetall-Schaltelement (BS), dessen anderes freies Ende (BS2) bei Erreichen der definierten Überhitzung aus einer Neutral-Stellung in eine Kurzschluss-Stellung mit dem freien Anschluss (A2) der zu der Masse (MP) isolierten Zuleitung (L2) verstellt ist.

3. Überlastgeschützter Elektromotor nach Anspruch 2
- mit einer Befestigung des einen Endes (BS1) des Bimetall-Schaltelementes (BS) an einem als Masse (MP) benutzten Statorteil, insbesondere einem Lagerbügel (LB), des Elektromotors (M);
- mit einer Kurzschluss-Kontaktstellung des anderen freien Endes (BS2) des Bimetall-Schaltelementes (BS) zu dem freien Anschluss (A1) einer von einem Bürstenhalter (B2), insbesondere einem Hammerbürstenhalter, aufgenommenen Entstördrossel (DR1) mit der zu der Masse (MP) isolierten Zuleitung (L2).

4. Überlastgeschützter Elektromotor nach Anspruch 2 und/oder 3
- mit einer Anordnung des Bimetall-Schaltelementes (BS) im Wärmestrahlungsbereich des Kommutators (K) des Elektromotors (M).

5. Überlastgeschützter Elektromotor nach zumindest einem der Ansprüche 1-4
- mit einer Anwendung zum Antrieb eines Kraftfahrzeug-Lüfters, insbesondere eines Innenraumlüfters.

## Claims

1. Overload-protected electric motor, in particular a direct-current commutator motor,
- with a main fuse (SI) which is associated with the electric motor (M) and other consumers in its circuit for protection in the event of an overload and which cuts off the feed voltage (P; N) when it responds;
- with a switching element which brings about an intentional saturation short circuit of the electric motor (M) as a result of defined overheating of the motor, and thereby causes the main fuse (SI) to respond;
- with an electric motor (M) in the form of a commutator motor with a current supply to at least two brushes (B1; B2) which loop a commutator (K) and of which a first brush (B1) is fed via a supply line (L1) also connected to the earth (MP) of the electric motor (M), and a second brush (B2) is fed from the feed voltage (P; N) via a supply line (L2) which is insulated in relation to the earth (MP);
- and with a switching element in the form of a bimetal switching element (BS) or the like which is connected to the earth (MP) and which, when the defined overheating of the motor has been reached, makes contact, by a switching movement, with the earth (MP) with a free connection (A1) of the supply line (L2) which is insulated in relation to the earth (MP).

2. Overload-protected electric motor according to claim 1,
- with a switching element in the form of an electrically conductive bimetal switching element (BS) which is fastened to the earth (MP) with one of its ends (BS1) and whose other, free end (BS2) is' shifted, when the defined overheating has been reached, out of a neutral position and into a short-circuit position with the free connection (A2) of the supply line (L2) which is insulated in relation to the earth (MP).

3. Overload-protected electric motor according to claim 2,
- with fastening of one end (BS1) of the bimetal switching element (BS) to a stator part, in particular a bearing cap (LB), of the electric motor (M), which stator part is used as the earth (MP);
- and with a short-circuit contact position of the other free end (BS2) of the bimetal switching element (BS) in relation to the free connection (A1) of an interference-suppressing choke (DR1) which is received by a brush-holder (B2), in particular a hammer-type brush-holder, with the supply line (L2) which is insulated in relation to the earth (MP).

4. Overload-protected electric motor according to claims 2 and/or 3,
- with disposition of the bimetal switching element (BS) in the thermal-radiation region of the commutator (K) of the electric motor (M).

5. Overload-protected electric motor according to at least one of claims 1 to 4,
- with application for the driving of a motor-vehicle fan, in particular an interior fan.

## Revendications

1. Moteur électrique protégé contre des surcharges, notamment moteur à collecteur à courant continu,
- ayant un coupe-circuit principal (SI) qui est associé au moteur électrique (M) et à d'autres consommateurs pour une protection en cas de surcharge et qui coupe la tension d'alimentation (P ; N) lorsqu'il réagit ;
- ayant un élément commutateur qui, en présence d'une surchauffe définie du moteur, provoque un court-circuit saturé volontaire du moteur électrique (M) et amène ainsi le coupe-circuit principal (SI) à réagir ;
- ayant un moteur électrique (M) sous la forme d'un moteur à collecteur comportant une alimentation en courant à au moins deux balais (B1 ; B2) entourant un collecteur (K), un premier balai (B1) étant alimenté par la tension d'alimentation (P ; N) par l'intermédiaire d'une ligne d'alimentation (L1) raccordée aussi à la masse (MP) du moteur électrique (M) et un deuxième balai (B) étant alimenté par la tension d'alimentation (P ; N) par l'intermédiaire d'une ligne d'alimentation (L2) isolée de la masse (MP);
- ayant un élément commutateur sous la forme d'un élément commutateur à bilame (BS) ou d'un élément analogue qui est relié à la masse (MP) et qui, lorsqu'une surchauffe déterminée du moteur est atteinte, met en contact par un mouvement de commutation la masse (MP) avec une borne libre (A1) de la ligne d'alimentation (L2) isolée de la masse (MP).

2. Moteur électrique protégé contre des surcharges selon la revendication 1,
- ayant un élément commutateur sous la forme d'un élément commutateur à bilame (BS) qui est fixé par l'une de ses extrémités (BS1) à la masse (MP), qui est conducteur d'électricité et dont l'autre extrémité libre (BS2), lorsqu'une surchauffe définie est atteinte, est déplacée d'une position neutre à une position de court-circuit avec la borne libre (A2) de la ligne d'alimentation (L2) isolée de la masse (MP).

3. Moteur électrique protégé contre des surcharges selon la revendication 2,
- ayant une fixation d'une extrémité (BS1) de l'élément commutateur à bilame (BS) à une partie de stator, utilisée comme masse (MP), notamment un étrier de logement (LB), du moteur électrique (M);
- ayant une position de contact de court-circuit de l'autre extrémité libre (BS2) de l'élément commutateur à bilame (BS) vers la borne libre (A1) d'une bobine d'antiparasitage (DR1) logée par un porte-balais (B2), notamment un porte-balais en marteau, avec la ligne d'alimentation (L2) isolée de la masse (MP).

4. Moteur électrique protégé contre des surcharges selon la revendication 2 et/ou 3,
- ayant une disposition de l'élément commutateur bimétallique (BS) dans la zone de rayonnement calorifique du collecteur (K) du moteur électrique (M).

5. Moteur électrique protégé contre des surcharges selon au moins l'une des revendications 1 à 4,
- ayant une utilisation pour le fonctionnement d'un ventilateur de véhicule automobile, notamment d'un ventilateur d'habitacle.
